# EUROPÄISCHE PATENTANMELDUNG

(11) **EP 2 787 403 A1**
(43) Veröffentlichungstag der Anmeldung: **08.10.2014**
(21) Anmeldenummer: 13162300.1
(22) Anmeldetag: 04.04.2013
(51) Int. Cl.: G05B 19/042, G05B 19/05, G06F 9/45

(54) **Verfahren zum automatischen Erstellen eines Automatisierungsprogramms aus einer technologischen Beschreibung einer Automatisierungslösung**

(71) Anmelder: Siemens Aktiengesellschaft, 80333 München (DE)
(72) Erfinder: Pohlan, Rudolf, 76337 Waldbronn (DE)

(57) **Zusammenfassung**

Angegeben wird ein Verfahren zum automatischen Erstellen eines Automatisierungsprogramms (22) aus einer technologischen Beschreibung (32) einer Automatisierungslösung, wobei das Automatisierungsprogramm (22) automatisch in Form eines Basisprogramms (48) und einzelner oder mehrerer aus dem Basisprogramm (48) aufrufbarer Interpretermodule (50) generiert wird, wobei das Basisprogramm (48) anhand der technologischen Beschreibung (32) in Form einer Abfolge von entsprechend einer späteren Ausführungsreihenfolge geordneten Datensätzen (56) generiert wird und wobei auf Basis der automatischen Analyse der technologischen Beschreibung (32) bei davon umfassten Befehlen und Statusabfragen jeweils ein zur Implementierung des Befehls oder der Statusabfrage vorgesehenes Interpretermodul (50) dem Automatisierungsprogramm (22) hinzugefügt wird.

## Beschreibung

Die Erfindung betrifft ein Verfahren zum automatischen Erstellen eines Automatisierungsprogramms zur Steuerung und/oder Überwachung eines verfahrenstechnischen Prozesses und einer dafür eingerichteten technischen Anlage, insbesondere einer verfahrenstechnischen industriellen Anlage. Das resultierende Automatisierungsprogramm ist durch ein zur Steuerung und/oder Überwachung der jeweiligen Anlage bestimmtes und entsprechend eingerichtetes Automatisierungsgerät ausführbar. Die automatische Erstellung des Automatisierungsprogramms erfolgt auf Basis einer technologischen Beschreibung einer Automatisierungslösung für den jeweiligen Prozess/die jeweilige Anlage. Eine solche technologische Beschreibung wird mittels einer dafür bestimmten und entsprechend eingerichteten Entwicklungsumgebung, also einem Softwarewerkzeug, erstellt. Die automatische Erstellung des Automatisierungsprogramms erfolgt ebenfalls mittels eines Softwarewerkzeugs. Dieses kann Bestandteil der zuvor genannten Entwicklungsumgebung sein.

Automatisierungslösungen für verfahrenstechnische industrielle Prozesse- sowohl für kontinuierliche Prozesse wie auch für Chargenprozesse - und entsprechende Anlagen werden heute auf der Automatisierungsebene typischerweise als sogenannte CFC-Programme (CFC = Continuous Function Chart) oder SFC-Programme (SFC = Sequential Function Chart) erstellt, also manuell programmiert. Die Programmierung erfolgt dabei mittels entsprechender automatisierungstechnischer Spracheditoren. Mit einem vom Hersteller des jeweiligen Automatisierungsgeräts mitgelieferten Sprachcompiler wird das jeweils erstellte Automatisierungsprogramm in einen auf das Automatisierungsgerät ladbaren und durch das Automatisierungsgerät ausführbaren Programmcode übersetzt.

In der Prozessindustrie werden allerdings vermehrt Planungswerkzeuge nachgefragt, mittels derer die jeweilige Anlage/der jeweilige Prozess auf technologischer Ebene verfahrenstechnisch beschreibbar ist. Speziell für diskontinuierliche Prozesse (Chargenprozesse für die sogenannte Batchproduktion) lassen sich damit bereits in der Planungsphase einzelne technische Grundfunktionen der Anlage, der davon umfassten Anlagenteile und einzelner Einrichtungen in der Anlage, wie zum Beispiel Dosieren, Befüllen, Rühren, Heizen, etc., genau festlegen.

Leitsystemhersteller stellen heute Engineeringsysteme bereit, die Programmierhilfsmittel für die oben erwähnten Sprachen CFC und SFC oder auch KOP, FUP und AWL, beinhalten. Diese Sprachen orientieren sich üblicherweise an der Norm IEC 61131-3. Gerade einzelne Grundfunktionen der jeweiligen Automatisierungslösung werden oft gemäß IEC 61131-3 oder einer äquivalenten Syntax definiert.

Diese Programmierhilfsmittel erlauben auf der Automatisierungsebene die Erstellung einer jeweiligen Automatisierungslösung. Die angebotenen Programmiersprachen, die teilweise auch interpretativ arbeiten, sind aber nur sehr bedingt geeignet, technologische Beschreibungen einer jeweiligen Anlage oder eines damit zu realisierenden Prozesses direkt umzusetzen. Programmvariable können zwar technologisch bezeichnet und kommentiert werden, die Programmiersprachen der Automatisierungsebene haben aber aufgrund ihres Programmiermodells keine spezifische technologische Ausrichtung. Sie orientieren sich vielmehr eher an den Betriebsmitteln und Betriebssystemen der Automatisierungsgeräte. Die Programmierhilfsmittel der Automatisierungsebene können daher nur als semitechnologisch bezeichnet werden. Auch durchgängige Interpretertechnologien sind heute auf der Automatisierungsebene noch nicht bekannt.

Allerdings sind bereits Planungswerkzeuge bekannt und eingeführt, mittels derer sich auf technologischer Ebene, zum Beispiel gemäß der Norm ANSI/ISA 88, verfahrenstechnische und damit technologische Anlagenbeschreibungen erstellen lassen. Solche technologischen Beschreibungen lassen sich allerdings nur sehr eingeschränkt mittels softwaretechnischer Werkzeuge in Automatisierungslösungen umsetzen. Erste Ansätze in dieser Hinsicht sind mit dem von der Siemens AG unter der Bezeichnung PCS 7 angebotenen Leitsystem bekannt geworden. Dort können mit Hilfe eines sogenannten vorlagenbasierten Verfahrens Automatisierungspläne, nämlich CFCs (Continuous Function Charts), für einzelne Messstellen einer Anlage generiert werden. Eine durchgängige Lösung auch für Grundfunktionen technischer Einrichtungen einer jeweiligen Anlage steht allerdings nicht zur Verfügung. Eine Programmierung der einzelnen Schritte und Transaktionen der Ablaufsteuerung muss heute noch mit den oben erwähnten Sprachen für die Automatisierungsgeräte durchgeführt werden. Damit können die jeweilige verfahrenstechnische Anlage und der damit realisierte Prozess nicht vollständig und durchgängig auf technologischer Ebene beschrieben werden.

Im Ergebnis ist also festzustellen, dass heute als Hilfsmittel zur Realisierung einer Automatisierungslösung für eine jeweilige technische Anlage die Sprachcompiler und Spracheditoren der jeweiligen Engineeringsysteme dominieren. Diese beziehen sich auf die Automatisierungsebene. Eine abstrakte und einfache technologieorientierte Beschreibung der Automatisierungslösung ist damit noch nicht möglich. Eine Umsetzung einer technologischen Anlagenbeschreibung in eine Automatisierungslösung setzt heute noch in hohem Maß Disziplin und Sorgfalt des Automatisierungsingenieurs voraus. Eine vollständige Gewährleistung einer Konsistenz der auf technologischer Ebene beschriebenen Anforderungen an die verfahrenstechnische Anlage auf der einen Seite und der resultierenden Automatisierungslösung auf der anderen Seite ist heute nicht gewährleistet.

Eine Aufgabe der vorliegenden Erfindung besteht entsprechend darin, ein Verfahren anzugeben, mit dem sich automatisch aus einer technologischen Beschreibung einer Automatisierungslösung ein zur Realisierung der Automatisierungslösung geeignetes Automatisierungsprogramm erstellen lässt. Die technologische Beschreibung der Automatisierungslösung umfasst dabei die technologische Beschreibung der jeweiligen Anlage und eine technologische Beschreibung des mit der Anlage zu realisierenden Prozesses. Damit definiert die technologische Beschreibung der Automatisierungslösung zum einen die von der Anlage umfassten technischen Einrichtungen und zum anderen eine Funktionalität der jeweiligen Einrichtung sowie schließlich in Form sogenannter Aktionen und Transitionen (Weiterschaltbedingungen) einen funktionalen Zusammenhang der von der Anlage umfassten technischen Einrichtungen zur Realisierung des jeweiligen technischen Prozesses. Bei diesen Einrichtungen des technischen Prozesses handelt es sich um Vorrichtungen zum Lagern, Transportieren und Verarbeiten der jeweiligen Stoffe und Materialien, aber auch um Sensoren und Aktoren, also zum Beispiel Füllstandswächter, Temperatursensoren, Ventile, Motoren, usw. Eine Funktionalität einer solchen Einrichtung ist bei einem Ventil zum Beispiel das Öffnen des Ventils und das Schließen des Ventils. Ein funktionaler Zusammenhang der von der Anlage umfassten technischen Einrichtungen ist damit zum Beispiel das Öffnen eines Ventils zum Abziehen des Inhalts eines Reaktors, sobald ein Füllstandswächter das Erreichen eines bestimmten Füllgrads anzeigt.

Die oben genannte Aufgabe wird erfindungsgemäß mit einem Verfahren mit den Merkmalen des Anspruchs 1 gelöst. Dafür ist bei einem Verfahren zum automatischen Erstellen eines durch ein Automatisierungsgerät ausführbaren Automatisierungsprogramms aus einer mittels einer Entwicklungsumgebung erstellten technologischen Beschreibung einer Automatisierungslösung Folgendes vorgesehen: Das automatische Erstellen des Automatisierungsprogramms erfolgt mit einem Programmgenerator, der im Folgenden mitunter auch als "Technological Compiler" bezeichnet wird. Im Rahmen des Verfahrens, also im Rahmen der automatischen Ausführung des Programmgenerators, wird die technologische Beschreibung der Automatisierungslösung automatisch analysiert. Die technologische Beschreibung der Automatisierungslösung liegt dabei in einer maschinenlesbaren Form in einem vorgegebenen Format vor. Ein solches Format kann zum Beispiel auf der Norm ISA-88 (IEC 61512-1) oder der NAMUR-Empfehlung NE 33 basieren. Im Rahmen der automatischen Erstellung des Automatisierungsprogramms wird ein Automatisierungsprogramm in Form eines Basisprogramms und einzelner oder mehrerer aus dem Basisprogramm aufrufbarer Interpretermodule generiert. Das Basisprogramm wird anhand der technologischen Beschreibung in Form einer Abfolge von entsprechend einer späteren Ausführungsreihenfolge geordneten Datensätzen generiert. Jeder Datensatz entsteht dabei im Rahmen des Verfahrens aus einer automatischen Umsetzung eines Teils der technologischen Beschreibung der Automatisierungslösung. Die Generierung der Datensätze in der spezifischen Reihenfolge erfolgt mittels eines Ablaufgenerators. Auf Basis der automatischen Analyse der technologischen Beschreibung wird dem Automatisierungsprogramm bei von der technologischen Beschreibung umfassten Befehlen und Statusabfragen jeweils ein zur Implementierung des Befehls oder der Statusabfrage vorgesehenes Interpretermodul hinzugefügt. Jedes derartige Interpretermodul ist - wie oben schon erwähnt - aus dem Basisprogramm aufrufbar.

Der Vorteil der Erfindung besteht damit darin, dass die automatische Generierung des Automatisierungsprogramms auf Basis der technologischen Beschreibung der jeweiligen Automatisierungslösung erfolgt. Ein Automatisierungsingenieur oder ein Team von Automatisierungsingenieuren entstellt damit nur noch diese technologische Beschreibung und die Generierung des Automatisierungsprogramms kann einem die Beschreibung verarbeitenden Softwarewerkzeug überlassen werden. Bisher musste der Automatisierungsingenieur oder ein Team solcher Fachleute sowohl die technologische Beschreibung wie auch das Automatisierungsprogramm erstellen.

Das Verfahren zum automatischen Erstellen eines solchen Automatisierungsprogramms setzt dabei voraus, dass auf technologischer Ebene eine durchgängige und vollständige Sprache für die Beschreibung einer verfahrenstechnischen Anlage sowohl für die Einzelsteuerebene wie auch für die Gruppensteuerebene mit den jeweils realisierten technischen Funktionen (Grundfunktionen) definiert ist. Darauf basiert ein auf dieser Ebene ansetzender und als Programmgenerator fungierender Sprachumsetzer. Dies ist der oben erwähnte Technological Compiler. Die Sprachumsetzung erfolgt dabei aus der für die technologische Beschreibung der Automatisierungslösung verwendeten Sprache in eine auf das Automatisierungsgerät ladbare und durch das Automatisierungsgerät ausführbare Sprache, also Programmcode.

Die technologische Anlagenbeschreibungssprache orientiert sich dabei sinnvollerweise an eingeführten Normen, zum Beispiel ANSI/ISA-88. Die Anlagenbeschreibungssprache umfasst allerdings Erweiterungen (Spracherweiterungen), insbesondere zur Abbildung von Grundfunktionen technischer Einrichtungen, wie sie von einer technischen Anlage der hier betroffenen Art umfasst sein können. Mit diesen Spracherweiterungen sind neben den Messstellen, die eine solche Anlage üblicherweise umfasst, die Signalflüsse von an den Messstellen aufgenommenen Messwerten und die Grundfunktionen der technischen Einrichtungen der Anlage inklusive der Aktionen und Transaktionsbedingungen für die Schritte und Transaktionen der Ablaufsteuerungen durchgängig technologisch beschreibbar.

Die automatische Erstellung des Automatisierungsprogramms ist dabei zweistufig realisiert. Zum einen wird aufgrund der technologischen Beschreibung ein sequentiell abarbeitbares Basisprogramm erzeugt. Zum anderen werden Interpretermodule ausgewählt, die bei der Abarbeitung des Basisprogramms aufgerufen werden. Das Basisprogramm umfasst dafür Referenzen auf einzelne derartige Interpretermodule. Das Basisprogramm und das oder jedes im Basisprogramm referenzierte Interpretermodul bilden das automatisch erstellte Automatisierungsprogramm. Bei der Abarbeitung des Basisprogramms wird dieses schrittweise ausgeführt und im Falle einer Referenzierung eines Interpretermoduls im Basisprogramm erfolgt als Bestandteil einer Abarbeitung/Ausführung eines jeweiligen Schrittes des Basisprogramms ein Aufruf und eine Ausführung des referenzierten Interpretermoduls.

Die Interpretermodule, die auf diese Weise Bestandteil des Automatisierungsprogramms werden, sind technologieorientierte Interpretermodule. Diese werden vom Hersteller des jeweiligen Automatisierungsgeräts (Leitsystemhersteller) in einer vordefinierten Programmbibliothek zur Verfügung gestellt. Eine solche Programmbibliothek kann auch technologieabhängig strukturiert oder fokussiert sein. Die Interpretermodule sind dabei in einer der herkömmlichen Programmiersprachen der Automatisierungstechnik wie oben erwähnt programmiert, so dass deren Ausführung durch einen auf dem jeweiligen Automatisierungsgerät ablaufenden und zur dortigen Laufzeitumgebung gehörenden Interpreter möglich ist.

Mit dem hier vorgestellten Konzept ist die technologieorientierte Planungsebene einer Anlage einzigartig mit der Automatisierungsebene verbunden. Eine Konsistenz zwischen der Planungsebene und der dortigen technologischen Beschreibung der jeweiligen Automatisierungslösung und der Automatisierungsebene mit dem dortigen automatisch erstellten Automatisierungsprogramm ist jederzeit gewährleistet, weil das Automatisierungsprogramm auf der technologischen Beschreibung basiert und damit die Automatisierungsebene direkt und ohne Zwischenschaltung manuelle Tätigkeiten mit der Planungsebene verknüpft ist.

Aus der EP 1 947 536 B ist ein Verfahren zum Betrieb eines Automatisierungsgeräts bekannt, bei dem ein vom Automatisierungsgerät ausführbares Steuerungsprogramm als Programmelemente zumindest Automatisierungsfunktionen sowie eine eine Ablauffolge der Automatisierungsfunktionen beschreibende Ablauffolgenbeschreibung umfasst, wobei bei dem Verfahren eine Auswertung und Umsetzung der Ablauffolgenbeschreibung in eine für eine Verarbeitungseinheit des Automatisierungsgeräts verarbeitbare Form durch einen Laufzeitinterpreter erfolgt.

Die oben genannte Aufgabe wird auch mit einem Programmiergerät gelöst, das nach dem Verfahren wie hier und im Folgenden beschrieben arbeitet und dafür Mittel zum Ausführen des Verfahrens und aller davon umfassten Verfahrensschritte aufweist. Das Verfahren ist dabei bevorzugt in Software implementiert. Die Erfindung ist damit einerseits auch ein entsprechendes Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch ein Programmiergerät, in dessen Speicher als Mittel zur Durchführung des Verfahrens und seiner Ausgestaltungen ein solches Computerprogramm geladen oder ladbar ist.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist. Vorteilhafte Ausgestaltungen des Programmiergeräts ergeben sich aus einer Umsetzung einzelner oder mehrerer Merkmale der Verfahrensansprüche oder einer Umsetzung von nur in der Beschreibung erwähnten Aspekten des Verfahrens.

Bei einer Ausführungsform des Verfahrens ist vorgesehen, dass ein Interpretermodul dem Automatisierungsprogramm hinzugefügt wird, indem für mindestens einen Datensatz des Basisprogramms, also einen auf diese Weise definierten Schritt des Basisprogramms, automatisch eine Referenzierung des jeweiligen Interpretermoduls generiert wird. Ein Datensatz des Basisprogramms entspricht normalerweise einer Grundfunktion oder einer sonstigen Funktion einer technischen Einrichtung der jeweiligen Anlage. Zum Auslösen einer im Zusammenhang mit der jeweiligen Funktion der technischen Einrichtung zu realisierenden Aktion ist das jeweils referenzierte Interpretermodul vorgesehen. Durch Aufruf und Ausführung eines solchen Interpretermoduls kann zum Beispiel ein Ventil geöffnet oder geschlossen und ein Motor gestartet, gestoppt oder mit einer bestimmten Solldrehzahl betrieben werden. Diese Funktionen und die zu deren Realisierung erforderlichen Programmcodeanweisungen sind Bestandteil des jeweiligen Interpretermoduls. Solche technischen Details werden damit vollständig vom Basisprogramm getrennt. Die Trennung lässt sich auf einfache und effiziente Art und Weise erreichen, indem das Basisprogramm in einem Datensatz, bei dessen Ausführung der Aufruf eines Interpretermoduls erforderlich ist, eine Referenz auf das entsprechende Interpretermodul umfasst. Eine fehlende derartige Referenz im jeweiligen Datensatz ist damit automatisch dahingehend auswertbar, dass kein Aufruf eines Interpretermoduls erforderlich ist. Eine im jeweiligen Datensatz angelegte Referenz ist dementsprechend automatisch dahingehend auswertbar, dass ein Aufruf eines so spezifizierten Interpretermoduls erforderlich ist. Der Aufruf des Interpretermoduls erfolgt, indem zu der als Referenz angegebenen Adresse verzweigt wird und die dort vorgehaltenen Programmcodeanweisungen durch einen Interpreter abgearbeitet werden.

Bei einer Ausführungsform des Verfahrens ist vorgesehen, dass jeder Datensatz des Basisprogramms eine fixe Struktur hat und ein erstes Feld zur Bezeichnung einer technischen Einrichtung der jeweiligen Anlage, ein zweites Feld zur Angabe einer in Bezug auf die technische Einrichtung definierten Aktion und ein drittes Feld für eine Referenz auf ein Interpretermodul umfasst. Indem jeder Datensatz des Basisprogramms eine solche fixe Struktur hat, kann die fixe Struktur bereits bei der automatischen Erzeugung des Basisprogramms und der zugrunde liegenden automatischen Erzeugung der einzelnen Datensätze für das Basisprogramm ausgenutzt werden. Mit den drei Feldern eines Datensatzes gelingt eine einfache Umsetzung der technologischen Beschreibung der Automatisierungslösung in ein (mittelbar) durch das Automatisierungsgerät ausführbares Automatisierungsprogramm. Ein für die technologische Beschreibung der Automatisierungslösung verwendetes Objekt und dessen Bezeichnung kann unmittelbar als Eintrag für das erste Feld des jeweiligen Datensatzes verwendet werden. Eine im Rahmen der technologischen Beschreibung der Automatisierungslösung für das jeweilige Objekt verwendete Aktion oder Transaktion kann unmittelbar für das zweite Feld des jeweiligen Datensatzes verwendet werden. In Ansehung eines Objekttyps des bei der technologischen Beschreibung der Automatisierungslösung verwendeten Objekts kann das in einem Datensatz gegebenenfalls zu referenzierende Interpretermodul ausgewählt werden. Die Umsetzung der technologischen Beschreibung der Automatisierungslösung in einzelne Datensätze des Basisprogramms reduziert sich damit in erster Näherung auf eine Umsetzung der im Rahmen der technologischen Beschreibung verwendeten Sprachelemente und eine Zuordnung der Ergebnisse der Umsetzung zu den einzelnen Feldern eines Datensatzes. Bei der Ausführung des Automatisierungsprogramms, nämlich der sukzessiven Abarbeitung des Basisprogramms, kann die fixe Struktur der Datensätze ebenfalls in günstiger Art und Weise ausgenutzt werden. Jeder Datensatz kann nämlich auf die gleiche Art und Weise bearbeitet werden, indem der Inhalt des ersten Feldes des Datensatzes ein Softwareobjekt spezifiziert, das die in der technologischen Beschreibung abgebildete technische Einheit der jeweiligen Anlage repräsentiert. Die in Bezug auf dieses Softwareobjekt auszulösende Aktion ergibt sich mit dem Inhalt des zweiten Feldes. Das dritte Feld braucht lediglich hinsichtlich einer dort gegebenenfalls angelegten gültigen Referenz auf ein Interpretermodul ausgewertet werden. Sofern sich dort eine gültige Referenz findet, wird der Aufruf des jeweiligen Interpretermoduls ausgelöst. Bei einer weiteren Ausführungsform des Verfahrens ist vorgesehen, dass das automatisch generierte Basisprogramm und das oder jedes im Basisprogramm referenzierte Interpretermodul in einen Speicher des zur Steuerung der jeweiligen Anlage vorgesehenen Automatisierungsgeräts geladen werden, wobei das Basisprogramm automatisch mit einem zum sukzessiven Aufruf der von dem Basisprogramm umfassten Datensätze vorgesehenen Aufrufbaustein verknüpft wird. Der Aufrufbaustein kann Bestandteil einer Laufzeitumgebung des Automatisierungsgeräts sein. Die Funktionalität des Aufrufbausteins ist damit fest vorgegeben und von der automatischen Generierung des Automatisierungsprogramms unabhängig. Beim Betrieb des Automatisierungsgeräts besteht die Aufgabe des Aufrufbausteins darin, das Basisprogramm auszuführen, indem sukzessive die davon umfassten Datensätze abgearbeitet werden. Dafür reicht es aus, wenn - kurz gefasst - dem Aufrufbaustein die Startadresse des ersten Datensatzes des Basisprogramms im Speicher des Automatisierungsgeräts mitgeteilt wird. Dies ist ein Beispiel für eine Verknüpfung des Basisprogramms mit dem Aufrufbaustein.

Bei einer alternativen Ausführungsform des Verfahrens ist vorgesehen, dass das automatisch generierte Basisprogramm und das oder jedes im Basisprogramm referenzierte Interpretermodul in einen Speicher des zur Steuerung der jeweiligen Anlage vorgesehenen Automatisierungsgeräts geladen werden, dass der Aufrufbaustein im Rahmen des Verfahrens automatisch generiert und mit dem Basisprogramm verknüpft wird und dass der Aufrufbaustein zusammen mit dem Basisprogramm und dem oder jedem im Basisprogramm referenzierten Interpretermodul in den Speicher des Automatisierungsgeräts geladen wird. Bei dieser Ausführungsform des Verfahrens gehört der Aufrufbaustein also nicht von vornherein zur Laufzeitumgebung des Automatisierungsgeräts. Stattdessen wird der Aufrufbaustein zusammen mit der Erstellung des Automatisierungsprogramms generiert. Eine Verknüpfung des Basisprogramms mit dem Aufrufbaustein durch Vorgabe einer Startadresse des ersten Datensatzes des Basisprogramms im Speicher des Automatisierungsgeräts kann also zusammen mit der Erstellung des Automatisierungsprogramms erfolgen. Das Automatisierungsprogramm wird dann zusammen mit dem Aufrufbaustein in den Speicher des Automatisierungsgeräts geladen.

Der Aufrufbaustein umfasst eine Funktionalität zum zyklischen Einlesen jeweils eines Datensatzes des Basisprogramms und eine Funktionalität zum Ausführen des eingelesenen Datensatzes im Wege einer Auswertung der dort zusammengefassten Daten. Die Auswertung der Daten jeweils eines Datensatzes, also die Auswertung der Inhalte der oben erläuterten Felder, ist dabei eine interpretative Auswertung. Die Abarbeitung des Basisprogramms mittels des Aufrufbausteins ist damit insgesamt eine interpretative Ausführung des automatisch generierten Automatisierungsprogramms. Die Laufzeitumgebung des jeweiligen Automatisierungsgeräts umfasst dafür einen geeigneten Interpreter. Ein solcher Interpreter braucht dabei in günstiger Art und Weise nicht zur Analyse einer komplexeren Syntax und/oder Semantik, wie dies bei einzelnen Programmiersprachen der Fall ist, geeignet sein. Die einzelnen Datensätze des Basisprogramms stellen die vom Interpreter zu bearbeitenden Befehle dar. Die Anzahl der theoretisch möglichen Befehle ist wiederum durch die Anzahl der für eine zu automatisierende technische Anlage zugelassenen technischen Einrichtungen begrenzt. Damit ergeben sich ein begrenzter Sprachumfang und eine sehr begrenzte Komplexität der von dem Interpreter zu verarbeitenden "Sprache" zur Spezifikation der Automatisierungslösung auf der Automatisierungsebene.

Die Entscheidung, ob der Aufrufbaustein einen Aufruf eines Interpretermoduls veranlassen muss, wird in vorteilhafter Weise dadurch sehr vereinfacht, dass der Aufrufbaustein lediglich prüfen muss, ob der jeweilige Datensatz eine Referenz auf ein Interpretermodul umfasst. Im Falle einer solchen Referenz ruft der Aufrufbaustein das Interpretermodul auf oder veranlasst einen solchen Aufruf.

Der Vorteil der Erfindung und ihrer Ausgestaltungen besteht damit insbesondere darin, dass auf technologischer Ebene abstrakt und vollständig eine erste Sprachebene definiert wird und dass auf der Automatisierungsebene eine zweite Sprachebene definiert wird, so dass einerseits eine automatische Umsetzung der der ersten Sprachebene zugehörigen technologischen Beschreibung der jeweiligen Automatisierungslösung in das der zweiten Sprachebene zugehörige Automatisierungsprogramm gelingt und andererseits im Weiteren eine automatische Abarbeitung des so erzeugten Automatisierungsprogramms mit einem zur Laufzeitumgebung des jeweiligen Automatisierungsgeräts gehörenden Interpreter möglich ist.

Die für die erste Sprachebene definierte Anlagenbeschreibungssprache orientiert sich - wie erwähnt - bevorzugt an eingeführten Standards und beschreibt die Gruppensteuerebene inklusive der technischen Funktionen (zum Beispiel Dosieren, Rühren, Heizen, etc.) sowie die Einzelsteuerebene mit den Einzelsteuereinheiten (zum Beispiel Ventile, Motoren, etc.) inklusive der jeweiligen Parameter und Signalflüsse. Diese Anlagenbeschreibungssprache ist gegenüber heutigen Standards derart erweitert, dass auch die Aktionen der im jeweiligen technischen Prozess notwendigen Schritte und Transitionsbedingungen in einer Schrittkette (Ablaufsteuerung; engl. Sequenzer) vollständig technologisch beschreibbar sind. Es werden dazu technologieorientierte Befehle und Status sowie zugehörige Statusabfragen gemäß der technischen Ausrüstung der Anlage für jede Einzelsteuereinheit oder technische Einrichtung definiert, die durchgängig zur technologischen Beschreibung der Schritte (Aktionen) und Transitionen (Transitionsbedingungen) in den Ablaufsteuerungen der technischen Funktionen herangezogen werden können. Dadurch werden eine Vollständigkeit der Anlagenbeschreibungssprache und eine Durchgängigkeit zwischen Einzelsteuerebene und Gruppensteuerebene herbeigeführt. Diese erste Sprachebene abstrahiert vollständig von den bisherigen Programmiermodellen der Automatisierungsgeräte.

Die für die Automatisierungsebene definierte zweite Sprachebene spezifiziert eine Zwischensprache, die geeignet ist, softwaretechnisch interpretiert zu werden, also eine Verarbeitung durch einen Interpreter erlaubt. Die Zwischensprache ist deskriptiv und sie beschreibt - kurz gefasst - die Programmstruktur der Automatisierungslösung in Form einer Folge einzelner verarbeitbarer Datensätze, wobei einzelne Datensätze jeweils ein Interpretermodul referenzieren. Speziell bei Ablaufsteuerungen der technischen Funktionen können auch nebenläufige oder alternative Programmstrukturen vorkommen. Entsprechend erlaubt die Zwischensprache auch eine Beschreibung von Schrittketten mit ihren Parallel- und Alternativverzweigungen, die standardmäßig interpretierbar und abarbeitbar sind. Die Programmstruktur (Folge von jeweils einzelnen verarbeitbaren Datensätzen) kann dem Automatisierungsgerät und damit dem oder den dort angeordneten Interpreter bzw. Interpretern zugänglich gemacht werden, indem sie im Sinne des Programmiermodells des jeweiligen Automatisierungsgeräts zum Beispiel in Datenbausteinen gespeichert und geladen wird. Genau ein zur Laufzeitumgebung des jeweiligen Automatisierungsgeräts gehöriger Interpreter wird benötigt, wenn der Interpreter sowohl zur Abarbeitung der Datensätze des Basisprogramms wie auch zum Aufruf und zur Verarbeitung dort referenzierter Interpretermodule geeignet ist. Mehrere Interpreter, die ebenfalls jeweils zur Laufzeitumgebung des jeweiligen Automatisierungsgeräts gehören, werden benötigt, wenn ein erster Interpreter zur Abarbeitung der Datensätze des Basisprogramms und zumindest ein weiterer Interpreter zum Aufruf und zur Verarbeitung der dort referenzierten Interpretermodule vorgesehen ist. Für eine leichte und einfache Abbildung orientiert sich die Zwischensprache auf der Automatisierungsebene an der abstrakten Anlagenbeschreibungssprache. Dies reduziert die Komplexität der Softwarefunktionalität, mittels derer aus der technologischen Beschreibung der Automatisierungslösung in der Anlagenbeschreibungssprache das Basisprogramm des Automatisierungsprogramms mit den vom Basisprogramm umfassten Datensätzen erzeugt wird. Die Inhalte der einzelnen Datensätze des Basisprogramms sind damit die sogenannten Tokens der Zwischensprache auf der Automatisierungsebene, deren Bearbeitung durch einen oder zumindest einen ebenfalls der Automatisierungsebene zugehörigen Interpreter erfolgt.

Die im Basisprogramm referenzierten Interpretermodule zur Steuerung der Einzelsteuereinheiten (engl.: Control Modules) oder der technischen Funktionen werden zum Beispiel vom Leitsystemhersteller zusammen mit ihrer technologischen Beschreibungshülle bereitgestellt. Für jede Einzelsteuereinheit oder technische Funktion gibt es ein oder mehrere Interpretermodule oder zumindest ein oder mehrere Interpretermodule zur Implementation der jeweiligen technologischen Befehle und Status sowie darauf gerichteter Statusabfragen. Einzelsteuereineiten (Ventil-, Motorsteuerungen, etc.) stellen Befehle und Status (inkl. Implementation) zur Verfügung. In der Ablaufsteuerung (technische Funktion) einer technischen Einrichtung werden diese für die Steuerung des Prozesses herangezogen.

Wie oben bereits erwähnt sind Interpretermodule aber auch frei mit herkömmlichen Sprachmitteln programmierbar. Die Interpretermodule sind im Sinne des Programmiermodells des Automatisierungsgeräts als Programme, Funktionen oder Funktionsbausteine implementiert und damit auf das Automatisierungsgerät ladbar. Sie gehören zum automatisch erzeugten Automatisierungsprogramm und werden im Rahmen des hier und im Folgenden beschriebenen Verfahrens zusammen mit dem automatisch erzeugten Basisprogramm in den Speicher des Automatisierungsgeräts geladen. Wenn zur Realisierung der jeweiligen Automatisierungslösung eine Mehrzahl von untereinander kommunikativ verbundenen Automatisierungsgeräten notwendig ist, wird das erzeugte Automatisierungsprogramm verteilt in mehrere Automatisierungsgeräte geladen. Zur Vereinfachung der nachfolgenden Beschreibung wird diese unter der Annahme fortgesetzt, dass jeweils ein Automatisierungsprogramm für genau ein Automatisierungsgerät erzeugt wird. Diese Formulierung soll allerdings nicht einschränkend ausgelegt werden. Vielmehr ist die Formulierung stets so auszulegen, dass damit auch eine Erzeugung von Automatisierungsprogrammen für mehrere Automatisierungsgeräte, die in einem Verbund ein Automatisierungssystem bilden und zusammen die Automatisierungslösung realisieren, erfasst ist.

Zur automatischen Umsetzung der technologischen Beschreibung der Automatisierungslösung wird eine Programmbibliothek zur Verfügung gestellt, die für bestimmte technologische Sprachelemente oder eine Gruppe von Sprachelementen der ersten Sprachebene eine technologische Beschreibungshülle und gegebenenfalls ein korrespondierendes vordefiniertes Interpretermodul sowie eine Abbildungsvorschrift (Regel) zur Abbildung des jeweiligen Sprachelements bzw. der jeweiligen Sprachelemente auf die zweite Sprachebene enthält.

Der an anderer Stelle auch als Ablaufgenerator bezeichnete technologieorientierte Compiler verbindet die erste und die zweite Sprachebene, indem er die Sprachelemente der ersten technologischen Sprachebene mithilfe geeigneter Kompilierregeln und unter Zuhilfenahme einer vordefinierten oder vorübersetzten Programmbibliothek konsistent auf die deskriptive Sprache der zweiten automatisierungstechnischen Sprachebene in einem Kompiliervorgang abbildet.

Bei einer besonderen Ausführungsform des Verfahrens übernimmt der technologieorientierte Compiler zusätzlich eine Konsistenzprüfung der Anlagenbeschreibung mithilfe eines Parsers auf technologischer Sprachebene. Dazu gehören syntaktische und semantische Prüfungen, zum Beispiel ob Schritt und Transition alternierend aufeinanderfolgen, et cetera.

Auf Seiten des Automatisierungsgeräts wird ein Laufzeitsystem eingeführt, das einen oder mehrere Interpreter umfasst, der bzw. die die vom technologischen Compiler generierte deskriptive Zwischensprache (das Basisprogramm des Automatisierungsprogramms) der zweiten Sprachebene vollständig interpretativ unter Verwendung der vordefinierten Interpretermodule abarbeiten kann bzw. können.

Die Erfindung ist damit insgesamt auch ein Automatisierungsgerät, in dessen Speicher ein nach einem Verfahren, wie hier und im Folgenden beschrieben, generiertes Basisprogramm und das oder jedes zugehörige Interpretermodul geladen ist und das beim Betrieb des Automatisierungsgeräts mittels dessen Verarbeitungseinheit ausgeführt wird.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung auch Änderungen und Modifikationen möglich, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein Automatisierungssystem mit einer Mehrzahl untereinander kommunikativ verbundener Automatisierungsgeräte zur Steuerung eines technischen Prozesses,
- FIG 2: eine schematisch vereinfachte Darstellung eines Automatisierungsgerätes mit einem davon im Betrieb ausgeführten Automatisierungsprogramm,
- FIG 3: eine schematisch vereinfachte Darstellung eines zum Erstellen eines Automatisierungsprogramms vorgesehenen Programmiergeräts,

- FIG 4: eine schematisch vereinfachte Darstellung des hier vorgeschlagenen Ansatzes zum automatischen Generieren eines Automatisierungsprogramms,
- FIG 5: eine schematisch vereinfachte Darstellung eines automatisch generierten Automatisierungsprogramms mit davon umfassten Datensätzen,
- FIG 6: eine schematisch vereinfachte Darstellung eines Datensatzes und
- FIG 7: eine schematisch vereinfachte Darstellung zur Erläuterung einer Ausführung eines automatisch generierten Automatisierungsprogramms.

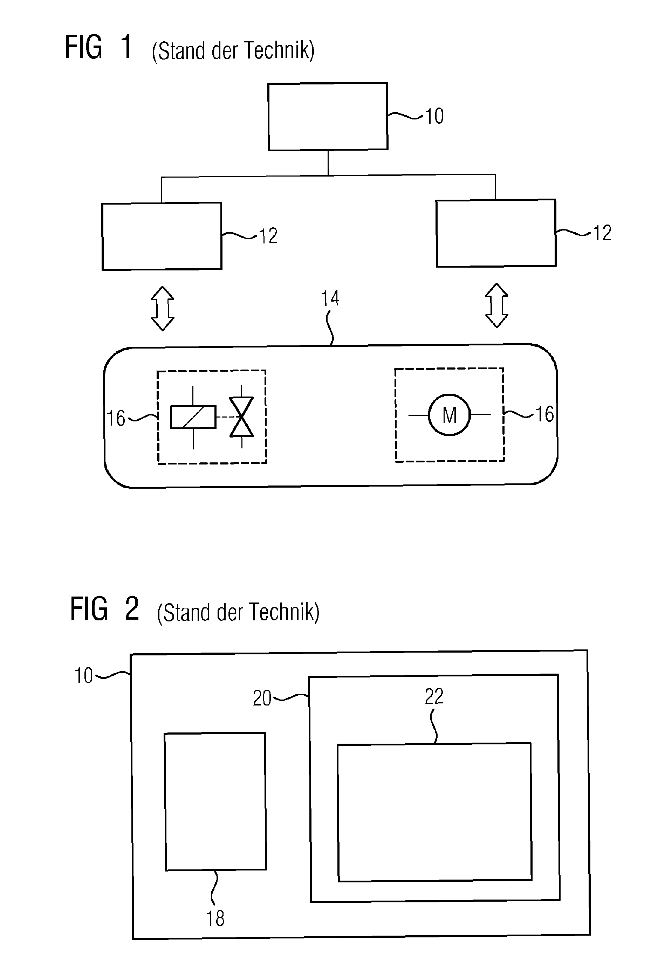

FIG 1 zeigt schematisch stark vereinfacht ein Automatisierungsgerät 10, bei dem es sich zum Beispiel um eine speicherprogrammierbare Steuerung (SPS) handelt, das kommunikativ mit weiteren Automatisierungsgeräten 12, bei denen es sich zum Beispiel um sogenannte dezentrale Feldgeräte handelt, verbunden ist. Das Automatisierungsgerät 10 oder die Automatisierungsgeräte 10, 12 ist bzw. sind zur Steuerung und/oder Überwachung eines nicht näher dargestellten industriellen technischen Prozesses 14 vorgesehen. Zur Steuerung und/oder Überwachung des Prozesses 14 sind in an sich bekannter Art und Weise technische Einrichtungen 16 vorgesehen. Lediglich beispielhaft sind als Bestandteil einer technischen Einrichtung 16 ein elektrisch gesteuertes Ventil und ein Elektromotor gezeigt. Komplexe technische Prozesse 14 umfassen oftmals eine Vielzahl derartiger und weiterer technischer Einrichtungen 16.

FIG 2 zeigt schematisch stark vereinfacht, dass jedes Automatisierungsgerät 10, 12 - hier am Beispiel des Automatisierungsgeräts 10 gezeigt - eine Verarbeitungseinheit 18 in Form von oder nach Art eines Mikroprozessors sowie einen Speicher 20 aufweist. In den Speicher 20 ist ein Automatisierungsprogramm 22 ladbar. Beim Betrieb des Automatisierungsgeräts 10 wird das Automatisierungsprogramm 22 mittels der Verarbeitungseinheit 18 ausgeführt. Das Automatisierungsprogramm 22 ist also eine Implementierung einer Automatisierungslösung für den jeweiligen technischen Prozess 14 (FIG 1) und die Ausführung des Automatisierungsprogramms 22 auf dem jeweiligen Automatisierungsgerät 10 realisiert die dort angelegte Form der Steuerung und/oder Überwachung des technischen Prozesses 14.

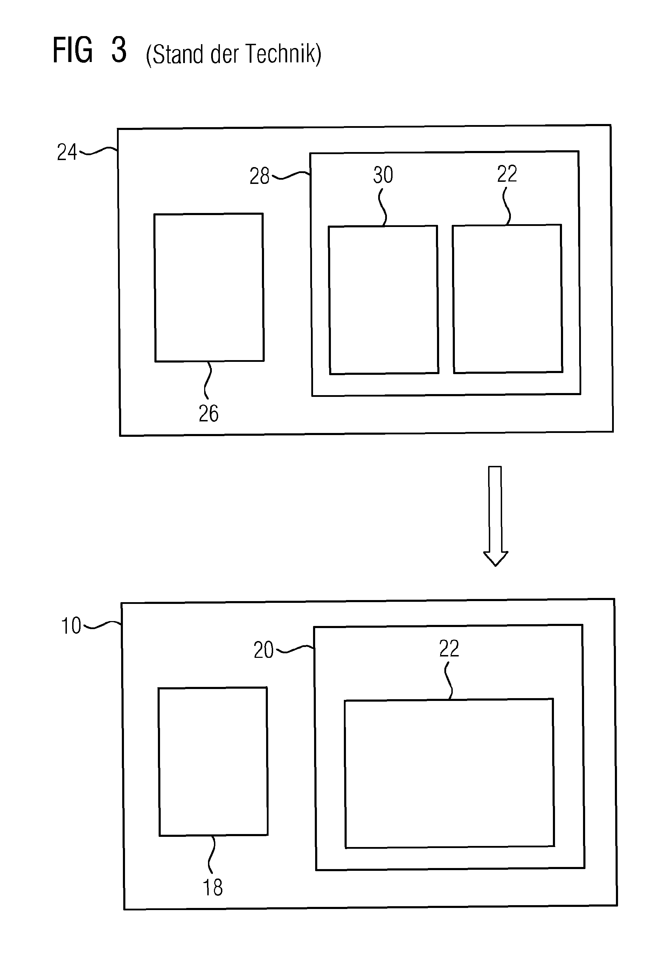

FIG 3 zeigt schematisch stark vereinfacht ein Programmiergerät 24, das ebenfalls eine Verarbeitungseinheit 26 in Form von oder nach Art eines Mikroprozessors sowie einen Speicher 28 aufweist. In den Speicher 28 ist Softwarewerkzeug, also ein Computerprogramm, zum Erstellen von Automatisierungsprogrammen 22 geladen. Ein solches Softwarewerkzeug wird üblicherweise als Entwicklungsumgebung 30 bezeichnet. Ein mittels der Entwicklungsumgebung 30 erstelltes Automatisierungsprogramm 22 wird in den Speicher 20 des jeweiligen Automatisierungsgeräts 10 geladen. Dafür sind das Programmiergerät 24 und das jeweilige Automatisierungsgerät 10 in an sich bekannter Art und Weise kommunikativ verbunden (nicht gezeigt).

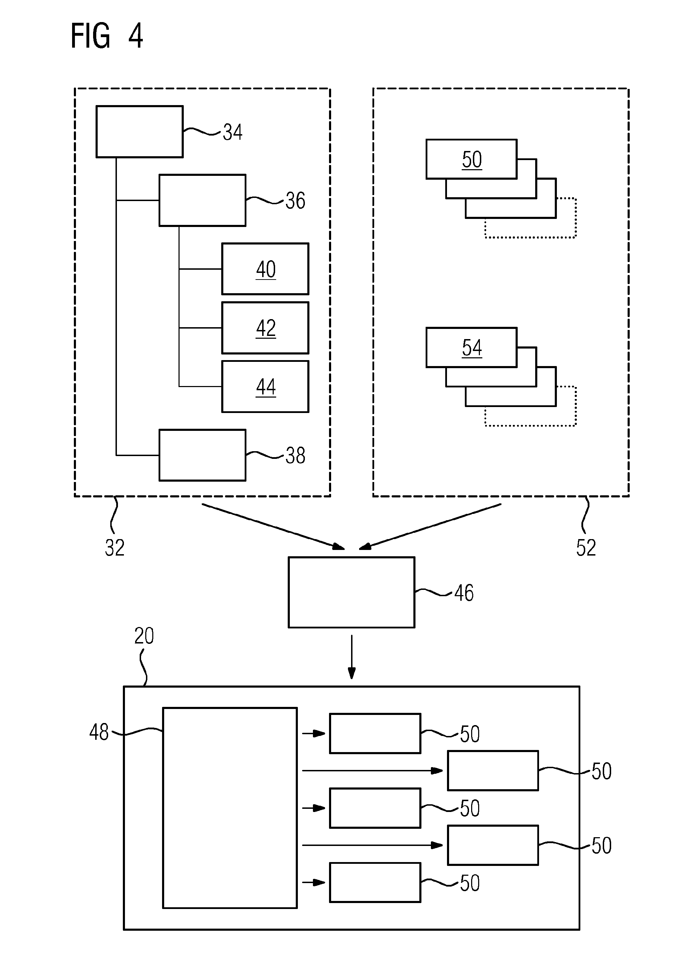

Die Darstellung in FIG 4 zeigt in schematisch vereinfachter Form eine technologische Beschreibung 32 einer Automatisierungslösung für einen technischen Prozess 14 (FIG 1). Die technologische Beschreibung wird für den jeweiligen Prozess 14 individuell durch einen Technologen oder einen sonstigen, mit der Automatisierung technischer Prozesse 14 befassten Spezialisten mittels einer Entwicklungsumgebung 30 (FIG 3) erstellt. Die die technologische Beschreibung 32 bildenden Daten befinden sich im Speicher 28 des jeweils verwendeten Programmiergeräts 24 (FIG 3).

Die Darstellung in FIG 4 zeigt hinsichtlich der technologischen Beschreibung 32 auch, dass diese üblicherweise hierarchisch strukturiert ist und die hier exemplarisch gezeigten drei Ebenen können zum Beispiel ein Anlagenteil 34 (erste Ebene) mit einem Mischer 36 und einem Mischermotor 38 (beides zweite Ebene) und einem dem Mischer 36 zugeordneten Füllstandswächter 40, Zulaufventil 42 und Abzugsventil 44 darstellen. Bei den genannten Elementen handelt es sich um Darstellungen einzelner von dem jeweiligen technischen Prozess 14 umfasster technischer Einrichtungen 16 (FIG 1). Die hierarchische Struktur drückt dabei auch eine Zugehörigkeit einzelner Elemente zueinander oder zu einem übergeordneten Element aus. Die technologische Beschreibung 32 umfasst aber auch funktionale Zusammenhänge. Diese sind in der Darstellung nicht gezeigt. Beispiele für solche funktionalen Zusammenhänge sind: der Mischermotor 38 wird aktiviert, wenn das Zulaufventil 42 geöffnet ist oder der Füllstandswächter 40 zumindest einen minimalen Füllgrad des Mischers 36 signalisiert; das Abzugsventil 44 wird geöffnet, wenn der Füllstandswächter 40 das Erreichen eines vorgegebenen maximalen Füllgrads des Mischers 36 signalisiert und so weiter.

Die technologische Beschreibung 32 wird automatisch mittels eines Ablaufgenerators 46, der an anderer Stelle der hier vorgelegten Beschreibung auch als Technological Compiler bezeichnet wird, analysiert. Der Ablaufgenerator 46 ist zum Beispiel Bestandteil der Entwicklungsumgebung 30 (FIG 3). Der Ablaufgenerator 46 generiert auf Basis der Analyse ebenfalls automatisch ein Automatisierungsprogramm 22 in Form eines Basisprogramms 48 und einzelner oder mehrerer aus dem Basisprogramm 48 aufrufbarer Interpretermodule 50. Der Aufruf der Interpretermodule 50 ist durch die vom Basisprogramm 48 ausgehenden und nach rechts weisenden Pfeile dargestellt.

Das automatisch generierte Automatisierungsprogramm 22 befindet sich mit den davon umfassten Elementen zunächst ebenfalls im Speicher 28 des jeweils verwendeten Programmiergeräts 24. Aus dem Speicher 28 kann das Automatisierungsprogramm 22 später in den Speicher 20 des jeweiligen Automatisierungsgeräts 10 geladen werden, wie dies bereits anhand der Darstellung in FIG 3 erläutert wurde.

Zur automatischen Generierung des Automatisierungsprogramms 22 greift der Ablaufgenerator 46 auf eine Programmbibliothek 52 oder mehrere Programmbibliotheken 52 zu. Die oder jede Programmbibliothek 52 befindet sich ebenfalls im Speicher 28 des Programmiergeräts 24 oder in einem für die verwendete Entwicklungsumgebung 30 erreichbaren entfernten Speicher (nicht gezeigt).

Die Programmbibliothek 52 oder einzelne Programmbibliotheken 52 - im Folgenden wird zur Vereinfachung von einer einzelnen Programmbibliothek 52 ausgegangen - umfasst die bei der Generierung des Automatisierungsprogramms 22 verwendbaren Interpretermodule 50. Die Programmbibliothek 52 umfasst des Weiteren Abbildungsregeln 54 zur Umsetzung der technologischen Beschreibung 32 in das Basisprogramm 48. Der Ablaufgenerator 46 erstellt mittels dieser Abbildungsregeln 54 aus der einer ersten Sprachebene zugehörigen technologischen Beschreibung 32 das einer zweiten Sprachebene zugehörige Basisprogramm 48. Das Basisprogramm 48 umfasst eine vollständige deskriptive Programmstruktur entsprechend der technologischen Beschreibung 32 der jeweiligen Automatisierungslösung.

Für die einzelnen Elemente der technologischen Beschreibung 32 existieren demnach jeweils zugehörige Abbildungsregeln 54. Ein Beispiel mag dies verdeutlichen: Wenn in der technologischen Beschreibung 32 ein Ventil (technische Einrichtung 16; FIG 1), zum Beispiel das bereits erwähnte Zulaufventil 42, dargestellt werden soll, wird dafür mittels der Entwicklungsumgebung 30 ein Softwareobjekt instanziiert, das zur Darstellung eines Ventils vorgesehen ist. Ein physikalisches Ventil kann bekanntlich geöffnet oder geschlossen sein. Entsprechend sind für das Softwareobjekt zumindest ein erster Status (zum Beispiel "geöffnet") und ein zweiter Status (zum Beispiel "geschlossen") definiert. Damit dem Softwareobjekt vorgegeben werden kann, dass das symbolisierte Ventil geöffnet oder geschlossen werden soll, sind für das Softwareobjekt zumindest eine erste Aktion (zum Beispiel "Öffnen") und eine zweite Aktion (zum Beispiel "Schließen") definiert. Um das mittels des instanziierten Softwareobjekts dargestellte Ventil von anderen Ventilen unterscheidbar zu machen, aber auch um der beabsichtigten technologischen Beschreibung 32 der Automatisierungslösung Rechnung zu tragen, wird das Softwareobjekt bezeichnet. Als Bezeichnung kommt eine textuelle Bezeichnung, hier also zum Beispiel "Zulaufventil_Mischer_1" in Betracht. Damit können innerhalb der technologischen Beschreibung 32 Abfragen definiert werden, zum Beispiel "WENN Zulaufventil_Mischer_1.geschlossen DANN ..." oder Aktionen ausgedrückt werden, zum Beispiel "Zulaufventil_Mischer_1.öffnen" oder "WENN ... DANN Zulaufventil_Mischer_1.öffnen".

Weil jedes in der technologischen Beschreibung 32 instanziierte Softwareobjekt auf einen zugrunde liegenden Objekttyp zurückgeht, kann zur automatischen Umsetzung eines Softwareobjekts anhand des jeweiligen Objekttyps eine passende Abbildungsregel 54 ausgewählt werden. Damit kann aus einzelnen Teilen der technologischen Beschreibung 32 jeweils ein korrespondierender Teil des Basisprogramms 48 generiert werden. Solche Teile des Basisprogramms 48 werden hier und im Folgenden allgemein als Datensatz 56, nämlich als Datensatz 56 innerhalb des Basisprogramms 48, bezeichnet. Die Datensätze 56 sind die einzelnen Befehle (Tokens) des Basisprogramms 48. Die Datensätze 56 werden bei der Ausführung des Basisprogramms 48 interpretiert.

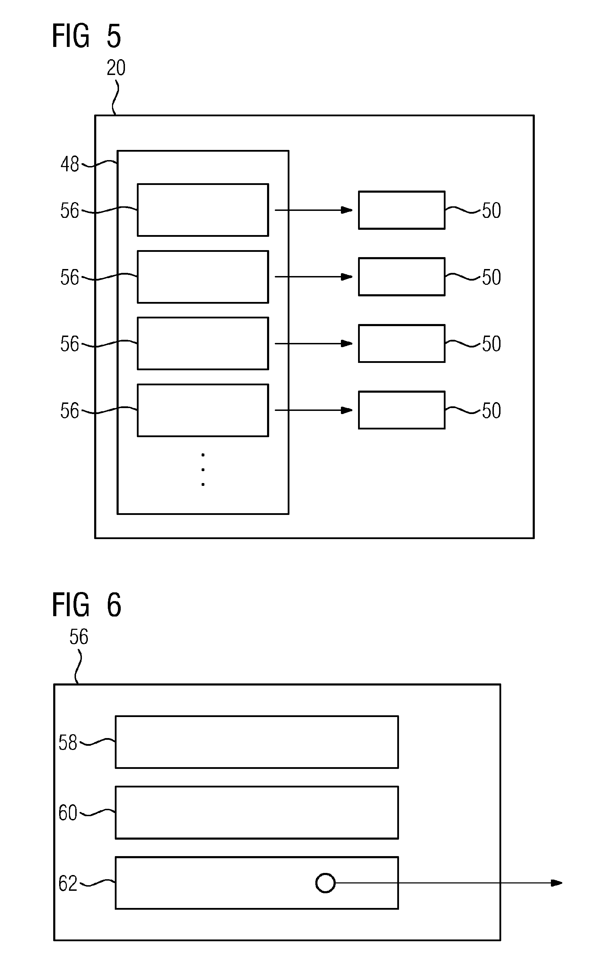

Die Darstellung in FIG 5 zeigt schematisch vereinfacht das automatisch generierte Basisprogramm 48 mit einzelnen davon umfassten Datensätzen 56. Das automatisch generierte Basisprogramm 48 basiert auf der jeweiligen technologischen Beschreibung 32 (FIG 4) und dementsprechend ist das Basisprogramm 48 Ergebnis einer automatischen Generierung mittels des Ablaufgenerators 46 (FIG 4), wobei das Basisprogramm 48 anhand der technologischen Beschreibung 32 in Form einer Abfolge von entsprechend einer späteren Ausführungsreihenfolge geordneten Datensätzen 56 generiert wird. Ausführungsreihenfolgen sind bei Ablaufsteuerungen explizit in Form von Schrittketten bzw. durch eine Priorität definiert, bei Einzelsteuereinheiten (Ventil-, Motorsteuerungen, etc.) der Einzelsteuerebene dagegen zunächst willkürlich in Abhängigkeit einer Zykluszeit, untereinander jedoch sinnvollerweise gemäß des Signalflusses geordnet, um Totzeiten zu vermeiden bzw. zu minimieren.

Jeder Datensatz 56 entsteht dabei im Rahmen der automatischen Generierung des Basisprogramms 48 aus einer automatischen Umsetzung der für die technologische Beschreibung 32 instanziierten Softwareobjekte anhand jeweils einer Abbildungsregel 54. Ebenso wird auf Basis der automatischen Analyse der technologischen Beschreibung 32 mittels des Ablaufgenerators 46 bei von der technologischen Beschreibung 32 umfassten Befehlen (zum Beispiel: "Zulaufventil_Mischer_1.öffnen"; siehe oben) und Statusabfragen (zum Beispiel: "Zulaufventil_Mischer_1.geschlossen"; siehe oben) dem Automatisierungsprogramm 22 jeweils ein zur Implementierung des Befehls oder der Statusabfrage vorgesehenes Interpretermodul 50 hinzugefügt. Das Interpretermodul 50 umfasst dann den gerätespezifischen Programmcode, um den eigentlichen Zugriff auf die jeweilige technische Einrichtung 16, hier also zum Beispiel ein Ventil, auszulösen. Insofern gibt es spezifischen Programmcode, der eine Ansteuerung des Ventils bewirkt, um ein Öffnen (oder Schließen) des physikalischen Ventils zu bewirken. Des Weiteren gibt es spezifischen Programmcode, um einen Status des physikalischen Ventils abzufragen, also zum Beispiel, ob das Ventil geschlossen ist. Für jede mögliche Aktion und jede mögliche Statusabfrage einer solchen oder ähnlichen technischen Einrichtung 16 des jeweiligen Prozesses 14 kann ein eigenes Interpretermodul 50 vorgesehen sein. Dann ist eine einfache Referenzierung des jeweiligen Interpretermoduls 50 in einem Datensatz 56 des Basisprogramms 48 ausreichend. Genauso ist möglich, dass für eine technische Einrichtung 16 des Prozesses 14 genau ein Interpretermodul 50 vorgesehen ist. Dann ist eine unspezifische Referenzierung des Interpretermoduls 50 zum Auslösen einer Aktion oder einer Statusabfrage nicht ausreichend. Die Referenzierung aus dem Datensatz 56 des Basisprogramms 48 ist dann spezifischer und bezieht sich entweder auf eine Startadresse derjenigen Programmcodeanweisung im Interpretermodul 50, die für die entsprechende Aktion oder Statusabfrage vorgesehen ist, oder es wird das Interpretermodul 50 insgesamt referenziert und im Rahmen des Aufrufs des Interpretermoduls 50 wird ein Parameter an das Interpretermodul 50 übergeben, der die jeweilige Aktion oder Statusabfrage eindeutig spezifiziert.

Die Darstellung in FIG 6 zeigt, dass jeder Datensatz 56 des Basisprogramms 48 eine fixe Struktur hat. Demnach umfasst jeder Datensatz 56 ein erstes, zweites und drittes Feld 58, 60, 62. Das erste Feld 58 ist zur Bezeichnung der jeweiligen technischen Einrichtung 16 im gesteuerten und/oder überwachten Prozess 14 vorgesehen. Diese fixe Struktur korrespondiert mit dem Erfordernis, dass alle Teile des automatisch generierten Automatisierungsprogramms als gemäß dem Programmiermodell des jeweiligen Automatisierungsgeräts 10 verarbeitbare Ladeeinheiten vorliegen müssen. Bei einer speicherprogrammierbaren Steuerung als Automatisierungsgerät 10 können die Datensätze 56 daher zum Beispiel als Datenbausteine angelegt sein.

Ein möglicher Inhalt des ersten Feldes 58 ist also (entsprechend dem bisherigen Beispiel) eine Bezugnahme auf das Zulaufventil 42, also zum Beispiel "Zulaufventil_Mischer_1". Ein möglicher Inhalt des zweiten Feldes 60 ist dementsprechend eine Bezugnahme auf eine Aktion oder einen Status des Zulaufventils 42, also zum Beispiel "Öffnen". Ein möglicher Inhalt des dritten Feldes 58 ist dann eine Referenz auf ein zum Zugriff auf ein Ventil bestimmtes Interpretermodul 50, nämlich zum Beispiel auf ein Interpretermodul 50, dessen Aufruf und Ausführung durch das Automatisierungsgerät 10 ein Öffnen des Ventils bewirkt.

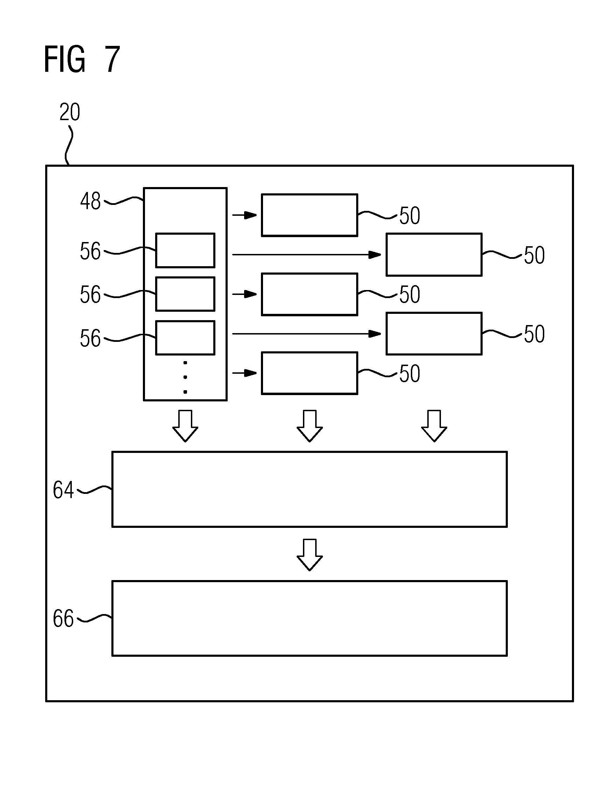

FIG 7 zeigt nunmehr ebenfalls schematisch vereinfacht eine Prinzipdarstellung zur Ausführung eines automatisch generierten Automatisierungsprogramms 22. Das Basisprogramm 48 und das oder jedes im Basisprogramm 48 referenzierte Interpretermodul 50 sind in den Speicher 20 eines Automatisierungsgeräts 10, 12 geladen. Das Basisprogramm 48 wird automatisch mit einem zum sukzessiven Aufruf der von dem Basisprogramm 48 umfassten Datensätze 56 vorgesehenen Aufrufbaustein 64 verknüpft. Der Aufrufbaustein 64 umfasst eine Softwarefunktionalität zum zyklischen Einlesen jeweils eines Datensatzes 56 des Basisprogramms 48 und eine Softwarefunktionalität zum Ausführen des eingelesenen Datensatzes 56 im Wege einer Auswertung der dort zusammengefassten Daten, also der Inhalte der Felder 58, 60, 62. Der Aufrufbaustein 64 holt also aus dem Basisprogramm 48 sukzessive die Daten der einzelnen Datensätze 56 ab und fungiert als Schnittstelle zwischen dem Basisprogramm 48 und den Interpretermodulen 50 und einem Interpreter 66 (oder einer Mehrzahl von Interpretern; nicht dargestellt), indem die Daten des jeweiligen Datensatzes 56 an den Interpreter 66 weitergereicht werden und der Interpreter die Be- und Verarbeitung der Daten des Datensatzes 56 und die Ausführung eines gegebenenfalls referenzierten Interpretermoduls 50 übernimmt.

Der Aufrufbaustein 64 prüft dabei - als Bestandteil der Funktionalität zum Ausführen des jeweils eingelesenen Datensatzes 56 - , ob der jeweilige Datensatz 56 eine Referenz auf ein Interpretermodul 50 umfasst. Im Falle einer solchen Referenz ruft der Aufrufbaustein 64 das Interpretermodul 50 auf, indem er dessen Ausführung durch den Interpreter 66 veranlasst.

Zur Verknüpfung des Aufrufbausteins 64 mit dem Basisprogramm 48 reicht es - kurz gefasst - aus, wenn dem Aufrufbaustein 64 die Startadresse des Basisprogramms 48 im Speicher 20 des Automatisierungsgeräts 10, 12 oder die Startadresse des ersten Datensatzes 56 im Basisprogramm 48 mitgeteilt wird. Ausgehend von dieser Startadresse kann der Aufrufbaustein 64 dann sukzessive jeweils einen Datensatz 56 aufrufen und verarbeiten. Wenn bei einem solchen sukzessiven Aufruf der Datensätze 56 der letzte Datensatz 56 des Basisprogramms 48 erreicht ist, beginnt der Aufrufbaustein 64 mit der erneuten Abarbeitung des Basisprogramms 48 mit dessen erstem Datensatz 56.

Der Aufrufbaustein 64 kann auch im Rahmen des Verfahrens zur automatischen Erstellung des Automatisierungsprogramms 22 ebenfalls automatisch generiert und mit dem Basisprogramm 48 verknüpft werden. Dann wird der Aufrufbaustein 64 zusammen mit dem Basisprogramm 48 und dem oder jedem im Basisprogramm 48 referenzierten Interpretermodul 50 in den Speicher 20 des jeweiligen Automatisierungsgeräts 10, 12 geladen. Ansonsten ist der Aufrufbaustein 64 zum Beispiel Bestandteil einer Laufzeitumgebung des Automatisierungsgeräts 10, 12 und kann damit als im Speicher 20 vorhanden vorausgesetzt werden.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen:
Angegeben wird ein Verfahren zum automatischen Erstellen eines Automatisierungsprogramms 22 aus einer technologischen Beschreibung 32 einer Automatisierungslösung, wobei das Automatisierungsprogramm 22 automatisch in Form eines Basisprogramms 48 und einzelner oder mehrerer aus dem Basisprogramm 48 aufrufbarer Interpretermodule 50 generiert wird, wobei das Basisprogramm 48 anhand der technologischen Beschreibung 32 in Form einer Abfolge von entsprechend einer späteren Ausführungsreihenfolge geordneten Datensätzen 56 generiert wird und
wobei auf Basis der automatischen Analyse der technologischen Beschreibung 32 bei davon umfassten Befehlen und Statusabfragen jeweils ein zur Implementierung des Befehls oder der Statusabfrage vorgesehenes Interpretermodul 50 dem Automatisierungsprogramm 22 hinzugefügt wird.

Der Vorteil des hier beschriebenen Ansatzes besteht vor allem darin, dass das Automatisierungsprogramm 22 auf Basis der technologischen Anlagenbeschreibung 32 ohne zusätzlichen Programmieraufwand automatisch generiert werden kann. Das Engineering reduziert sich dementsprechend auf das Erstellen der technologischen Beschreibung und das Bereitstellen von Interpretermodulen 50 für die von dem jeweils zu steuernden und/oder zu überwachenden technischen Prozess 14 umfassten technischen Einrichtungen 16.

Der Ansatz ist zweistufig, weil zum einen anhand der technologischen Beschreibung ein Basisprogramms 48 mit einzeln abarbeitbaren Datensätzen 56 generiert wird und zum anderen - ebenfalls anhand der technologischen Beschreibung 32 - aus dem Basisprogramm 48 aufzurufende Interpretermodule 50 ausgewählt werden. Die Zweistufigkeit setzt sich bei der Ausführung des automatisch generierten Automatisierungsprogramms 22 fort, indem auf der einen Seite das Basisprogramm 48 schrittweise zyklisch abgearbeitet wird und auf der anderen Seite bei einem im Basisprogramm 48 referenzierten Interpretermodul 50 der Aufruf und die Ausführung des jeweiligen Interpretermoduls 50 erfolgt. Der Ansatz kann vollständig auf die herkömmliche Erstellung von SFC-Programmen oder dergleichen verzichten und stellt die Konsistenz zwischen technologischer Beschreibung 32 von Grundfunktionen der technischen Einrichtungen 16 des jeweiligen technischen Prozesses 14 und dem Automatisierungsprogramm 22 sicher. Die Ablaufsteuerung wird damit nur noch auf verfahrenstechnischer Ebene in der Planungsphase der jeweiligen Anlage definiert und beschrieben. Das Erstellen eines SFC-Programms kann deshalb entfallen, weil aus der technologischen Beschreibung 32 eine vollständige deskriptive Programmstruktur für einen Interpreter 66, insbesondere einen SFC-Interpreter, generiert wird.

## Patentansprüche

1. Verfahren zum automatischen Erstellen eines durch ein Automatisierungsgerät (10, 12) ausführbaren Automatisierungsprogramms (22) aus einer mittels einer Entwicklungsumgebung (30) erstellten technologischen Beschreibung (32) einer Automatisierungslösung,
wobei die technologische Beschreibung (32) automatisch analysiert wird,
wobei das Automatisierungsprogramm (22) automatisch in Form eines Basisprogramms (48) und einzelner oder mehrerer aus dem Basisprogramm (48) aufrufbarer Interpretermodule (50) generiert wird,
wobei das Basisprogramm (48) anhand der technologischen Beschreibung (32) in Form einer Abfolge von entsprechend einer späteren Ausführungsreihenfolge geordneten Datensätzen (56) generiert wird und
wobei auf Basis der automatischen Analyse der technologischen Beschreibung (32) bei davon umfassten Befehlen und Statusabfragen jeweils ein zur Implementierung des Befehls oder der Statusabfrage vorgesehenes Interpretermodul (50) dem Automatisierungsprogramm (22) hinzugefügt wird.

2. Verfahren nach Anspruch 1, wobei ein Interpretermodul (50) dem Automatisierungsprogramm (22) hinzugefügt wird, indem für mindestens einen Datensatz (56) des Basisprogramms (48) automatisch eine Referenzierung des jeweiligen Interpretermoduls (50) generiert wird.

3. Verfahren nach Anspruch 1 oder 2, wobei jeder Datensatz (56) des Basisprogramms (48) eine fixe Struktur hat und ein erstes Feld (58) zur Bezeichnung einer technischen Einrichtung (16), ein zweites Feld (60) zur Angabe einer in Bezug auf die technische Einrichtung (16) definierten Aktion und ein drittes Feld (62) für eine Referenz auf ein Interpretermodul (50) umfasst.

4. Verfahren nach Anspruch 1, 2 oder 3, wobei das automatisch generierte Basisprogramm (48) und das oder jedes im Basisprogramm (48) referenzierte Interpretermodul (50) in einen Speicher (20) eines Automatisierungsgeräts (10, 12) geladen werden, wobei das Basisprogramm (48) automatisch mit einem zum sukzessiven Aufruf der von dem Basisprogramm (48) umfassten Datensätze (56) vorgesehenen Aufrufbaustein (64) verknüpft wird.

5. Verfahren nach Anspruch 4, wobei der Aufrufbaustein (64) im Rahmen des Verfahrens automatisch generiert und mit dem Basisprogramm (48) verknüpft wird und zusammen mit dem Basisprogramm (48) und dem oder jedem im Basisprogramm (48) referenzierten Interpretermodul (50) in den Speicher (20) des Automatisierungsgeräts (10, 12) geladen wird.

6. Verfahren nach Anspruch 4 oder 5, wobei der Aufrufbaustein (64) eine Funktionalität zum zyklischen Einlesen jeweils eines Datensatzes (56) des Basisprogramms (48) umfasst und eine Funktionalität zum Ausführen des eingelesenen Datensatzes (56) im Wege einer Auswertung der dort zusammengefassten Daten umfasst.

7. Verfahren nach Anspruch 6, wobei der Aufrufbaustein (64) als Bestandteil der Funktionalität zum Ausführen des eingelesenen Datensatzes (56) prüft, ob der jeweilige Datensatz (56) eine Referenz auf ein Interpretermodul (50) umfasst und wobei der Aufrufbaustein (64) im Falle einer solchen Referenz das Interpretermodul (50) aufruft.

8. Computerprogramm (30) mit Programmcodemitteln, um alle Schritte von jedem beliebigen der Ansprüche 1 bis 7 durchzuführen, wenn das Computerprogramm (30) auf einem zum Erstellen von Automatisierungsprogrammen (22) für Automatisierungsgeräte (10, 12) vorgesehenen Programmiergerät (24) ausgeführt wird.

9. Programmiergerät (24), das zum Erstellen von Automatisierungsprogrammen (22) für Automatisierungsgeräte (10, 12) bestimmt und eingerichtet ist, mit einer Verarbeitungseinheit (26) und einem Speicher (28), in den ein Computerprogramm (30) nach Anspruch 8 geladen ist, das im Betrieb des Programmiergeräts (24) durch dessen Verarbeitungseinheit (26) ausgeführt wird.

10. Automatisierungsgerät (10), mit einem Speicher (20), in den ein nach einem Verfahren nach einem der Ansprüche 1 bis 7 generiertes Basisprogramm (48) und das oder jedes zugehörige Interpretermodul (50) geladen ist.
